# EUROPEAN PATENT APPLICATION

(11) **EP 1 480 392 A1**
(43) Date of publication of application: **24.11.2004**
(21) Application number: 03291154.7
(22) Date of filing: 19.05.2003
(51) Int. Cl.: H04L 12/46

(54) **A method, an access network element, a network access server, and a computer software product for accessing a network**

(71) Applicant: ALCATEL, 75008 Paris (FR)
(72) Inventor: Handekyn, Koen, 9000 Gent (BE); Van Ackere, Michel, 9100 Sint-Niklaas (BE)
(74) Representative: Brose, Gerhard, Dipl.-Ing.

(57) **Abstract**

The invention relates to a method for accessing a network access server (AS, AS1) in a multiple terminal access network including a local area network and an asynchronous transfer mode network, said local area network connecting multiple terminal devices (HO, HO1, HO2, HO3) via an access network element (CPE', CPE1) with said asynchronous transfer mode network comprising the network access server (AS1, AS), where the local area network is an Ethernet and in that exchanging Ethernet packet(s) between one terminal device of said multiple terminal devices (HO, HO1, HO2, HO3) and said network access server (AS1, AS) by transmitting Ethernet packet(s) over a defined separate asynchronous transfer mode connection (Als) identified by a media access control address. The invention further relates to an access network element CPE', CPE1), and network access server (AS, AS1), and a computer software product.

## Description

The present invention relates to method for accessing a network access server in a multiple terminal access network including a local area network and an asynchronous transfer mode network, the local area network connecting multiple terminal devices via an access network element with the asynchronous transfer mode network comprising the network access server. Furthermore, the present invention relates to an access network element, a network access server, and a computer software product.

Many of todays access network architectures are multiple user access networks including access network servers and multiple slave network termination devices. A connecting and mediating network access element like a gateway or a modem connects the multiple network termination devices in a multi-user network interface topology by a shared media link with a network access server. Each network termination device is assigned usually its own unique address. The access network server communicates via asynchronous transfer mode (ATM) with the appropriate network termination devices over the shared media link.

Such a multiple user access network is described in the US Patent No. 6,327,266.

Terminal network devices might be personal computers or the like within an Ethernet local area network (LAN), where the local area network might have a switch, hub, router, or a gateway connected with e.g. a digital subscriber line modem providing via an copper wire local loop access to an digital subscriber line access multiplexer, and the digital subscriber line multiplexer might be connected to an broadband access server of an Internet service provider within an ATM backbone network.

After end-to-end permanent virtual circuits (PVC) between modem and access multiplexer as well as between access multiplexer and network access server are established, activities such as Internet protocol at the upper layer protocols become transparent. In this end-to-end PVC architecture with bridging, the service destination is reached by the creation of PVCs between each hop.

Each device interface is usually identified by a unique address, the so called MAC address. MAC address stands short for media access control address. Also referred to as adapter address. A MAC address is a 12-digit alphanumeric string, separated by dashes into six sets of two digits, that uniquely identifies every hardware networking device on the planet. MAC addresses are hard-coded, and in most cases, cannot be changed (broadband routers are the exception).

On a local area network or other network, the MAC address is a network element's unique hardware number. On an Ethernet local area network, it corresponds to the Ethernet address. When connected to the Internet from a computer (or host as the Internet protocol thinks of it), a correspondence table relates the IP address to your computer's (physical) MAC address on the local area network.

The MAC address is used by the media access control sub-layer of the data-link layer of telecommunication protocol. There is a different MAC sub-layer for each physical device type. The other sub-layer level in the data-link layer is the logical link control sub-layer.

A hub is treated as a place of convergence where data arrives from one or more directions and is forwarded out in one or more other directions. A hub usually includes a switch of some kind. (And a product that is called a "switch" could usually be considered a hub as well.) The distinction seems to be that the hub is the place where data comes together and the switch is what determines how and where data is forwarded from the place where data comes together. Regarded in its switching aspects, a hub can also include a router.

As a network product, a hub may include a group of modem cards for dial-in users, a gateway card for connections to a local area network, and a connection to a line.

When a set of terminals like the personal computers mentioned above connected via a local area network sharing access over a digital subscriber line modem, all terminals share a single asynchronous transfer mode connection over permanent virtual circuits.

When sharing a modem, the problem of multiple streams interference occurs. The invention focus the problem of reducing this interference.

The problem is solved by a method for accessing a network access server in a multiple terminal access network including a local area network and an asynchronous transfer mode network, said local area network connecting multiple terminal devices via an access network element with said asynchronous transfer mode network comprising the network access server, where said local area network is an Ethernet and where exchanging Ethernet packet(s) between one terminal device of said multiple terminal devices and said network access server by transmitting Ethernet packet(s) over a defined separate asynchronous transfer mode connection identified by a media access control address.

The problem is further solved by an access network element connected with multiple terminal devices via a local area network, said access network element is further connected with a network access server via an asynchronous transfer mode network, where said local area network is an Ethernet, and where said access network element comprising interface means for supporting multiple asynchronous transfer mode connections identified by media access control addresses.

And the problem is solved by a network access server connected with an access network element via an asynchronous transfer mode network, said access network element is connected with multiple terminal devices via a local area network, where said local area network is an Ethernet, and where said network access server comprising interface means for supporting multiple asynchronous transfer mode connections identified by media access control addresses.

Furthermore the problem is solved by a corresponding computer software product for accessing a network access server in a multiple terminal access network including a local area network and an asynchronous transfer mode network, said local area network connecting multiple terminal devices via an access network element with said asynchronous transfer mode network comprising the network access server, where said local area network is an Ethernet and where the computer software product comprising programming means for exchanging Ethernet packet(s) between one terminal device of said multiple terminal devices and said network access server by transmitting Ethernet packet(s) over a defined separate asynchronous transfer mode connection identified by media access control address.

The invention is based on the idea of modem sharing by stream discrimination based on source MAC addresses. Today's modems do not have a bridging mode mechanism to discriminate incoming streams and binding them to a dedicated (set of) ATM connections.

Accordingly, it is an object and advantage of the present invention to provide access networks where terminals on a local area network sharing an e.g. digital subscriber line modem have their own virtual ATM connection.

Another advantage of the present invention is that the invention easy to implement as software extension without requiring physical changes and these adaptation are even standardization conform.

A further advantage of the present invention is that the solution does not require exhaustive processing as the discrimination of user streams is solved at layer "2" and not at layer "3" or above.

Yet another advantage of the present invention is that it enables dedicated ATM connections over a simple and inexpensive shared (bridged) modem.

These and many other objects and advantages of the present invention will become apparent to those of ordinary skill in the art from a consideration of the drawings and ensuing description, where
**Figure 1** is a schematic drawing of a prior art access network configuration.
**Figure 2** is a schematic drawing of a prior art shared access network element.
**Figure 3** is a schematic drawing of prior art connections between participating network elements.
**Figure. 4** is a schematic drawing of connections between participating network elements illustrating the method according to the invention.
**Figure. 5** is a schematic drawing of a shared access network element according to the invention in the network context.

Most connections between routers and an Asynchronous Transfer Mode (ATM) switch, using multiple routed protocols over permanent virtual circuits (PVCs). The configuration uses logical link control (LLC) encapsulation, and the protocols used are Internet protocol (IP) and internet work packet exchange (IPX).

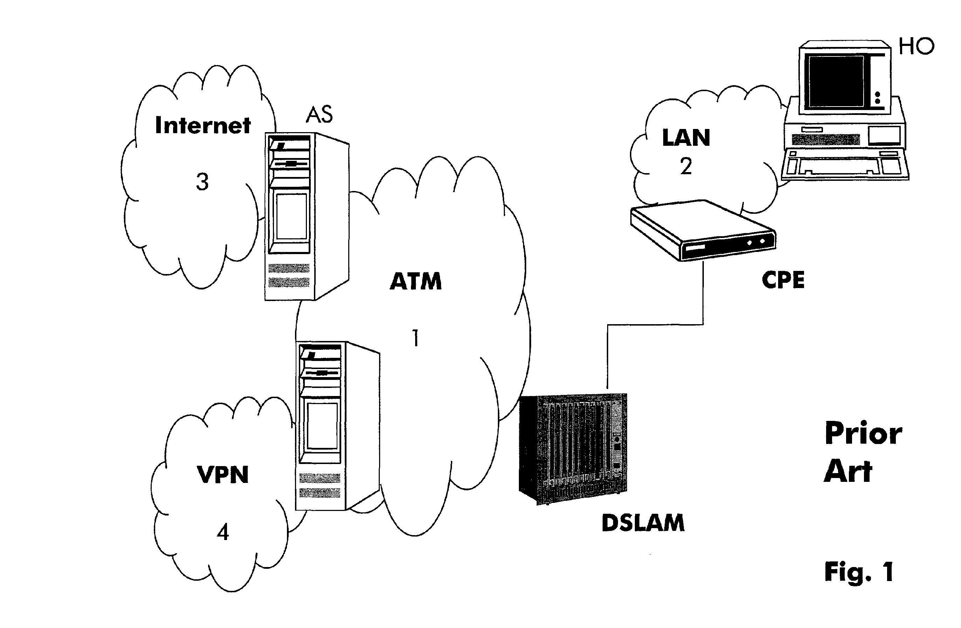

Figure 1 shows several networks as clouds, namely an ATM cloud 1, a local area network (LAN) cloud 2, an Internet cloud 3, and a virtual private network (VPN) cloud 4. The Internet cloud 3 is connected with the ATM cloud 1 as well as the VPN cloud 4 is connected with the ATM cloud 1 via access servers AS. The LAN cloud 2 connects a host HO with a customer premises equipment CPE, e.g. a digital subscriber line (DSL) modem. The customer premises equipment CPE is connected with an digital subscriber line access multiplexer DSLAM, which itself is connected (or a part) of the ATM cloud 1.

The configuration enables a host HO to reach networks like the Internet cloud 3 or the VPN cloud 4. Via the LAN cloud the host HO is enabled to reach the customer premises equipment CPE, e.g. a DSL modem. The customer premises equipment CPE could connect via a line to the DSL access multiplexer DSLAM. The DSL access multiplexer DSLAM could continue the connection through the ATM cloud reaching finally a network access server AS (to reach the Internet or the VPN networks 3, 4).

A customer premises equipment CPE might be a telephone or other service provider equipment that is located on the customer's premises (physical location) rather than on the provider's premises or in between. Telephones, modems, integrated services digital network adapters, cable TV adapters, and Digital Subscriber Line routers are examples. Such devices at the customer's physical location are called access network elements.

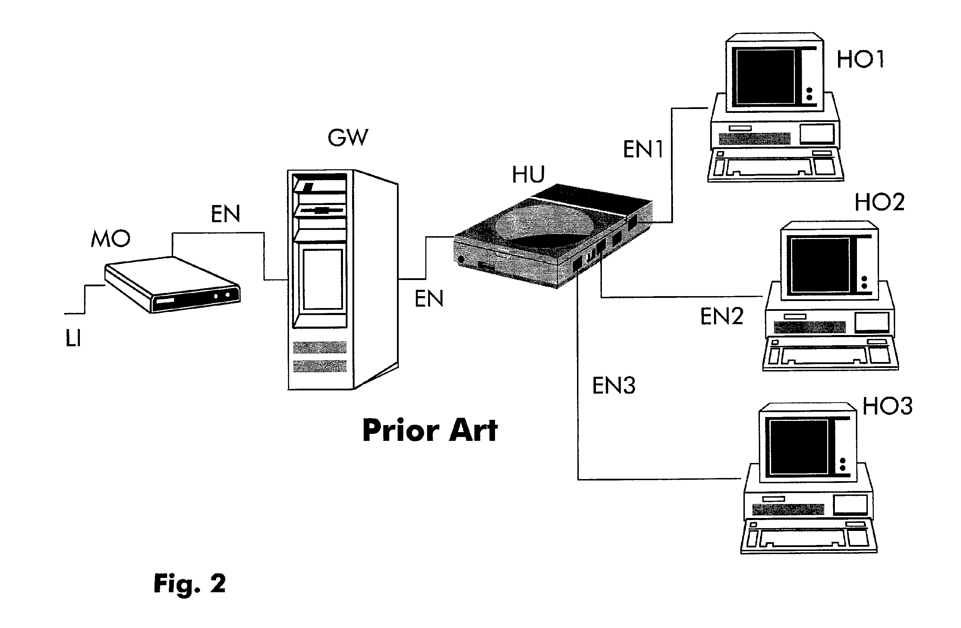

Figure 2 shows the network elements of the LAN cloud 2 in detail. There are several hosts HO1, H02, and HO3, a hub HU, a gateway GW and a modem MO. The hosts HO1, HO2, and HO3, are connected via Ethernet cables EN1, EN2, and EN3 with the hub HU. The hub HU is also connected with a gateway GW via an Ethernet connection EN; and the gateway GW is connected via an Ethernet connection EN with the modem MO. The modem MO terminates the line LI, also called local loop. The hosts HO1, HO2, and HO3 on the LAN share a single modem (connection).

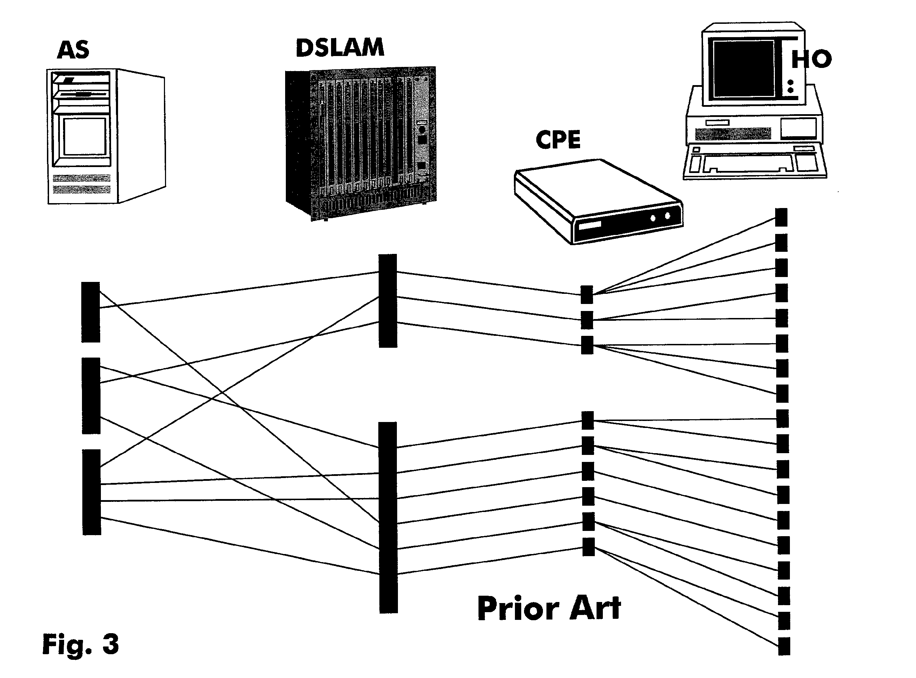

Figure 3 shows single connections between hosts HO and network access servers AS via customer premises equipment CPR and DSL access multiplexer DSLAM etc.

Ethernet connections between multiple host HO and one (shared) customer premises equipment CPE allow exchanging packets via a single ATM connection, i.e. a permanent virtual path (PVC) to the DSL access multiplexer DSLAM and set forth reaching the corresponding network access server AS through an ATM network.

That means the hosts sharing a customer premises equipment share a single ATM connection (PVC). Hence, the different packet streams will interfere with each other.

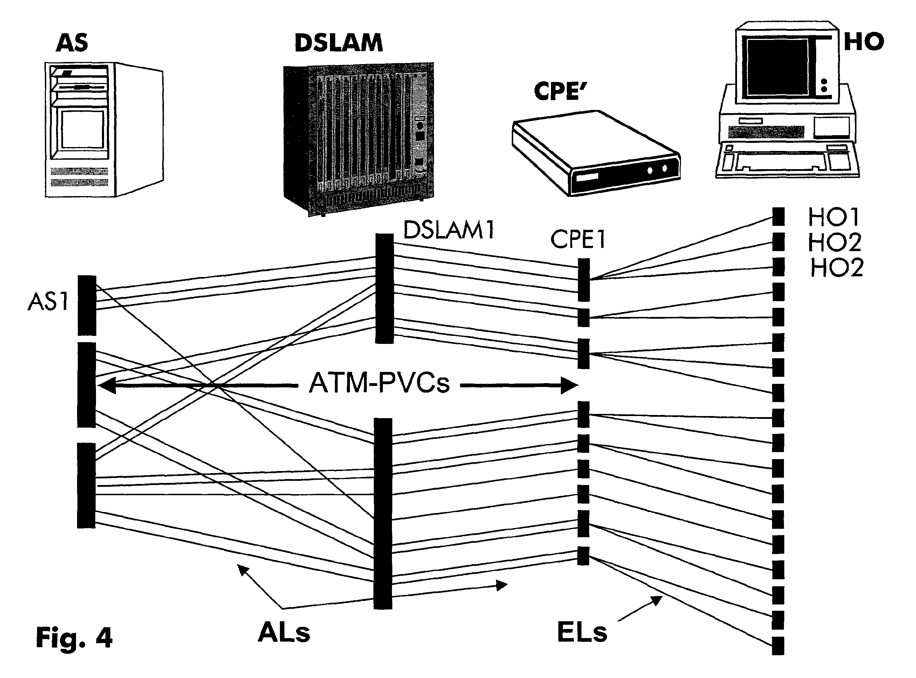

Figure 4 illustrates the basic idea behind the invention that the data streams are discriminated and each stream has a private permanent virtual circuit ALs per Ethernet link ELs. The innovation is that an enhanced customer premises equipment CPE', i.e. the access network element in general, continues the Ethernet links (packet streams) ELs by parallel permanent virtual circuits ALs. Especially for each of the hosts HO1, HO2, and HO3, each having an Ethernet link Els to a enhanced customer premises equipment CPE1 the Ethernet links are each continued by (parallel) permanent virtual cicuits ALs to an access multiplexer DSLAM1 and further to an access server AS1 through a ATM network.

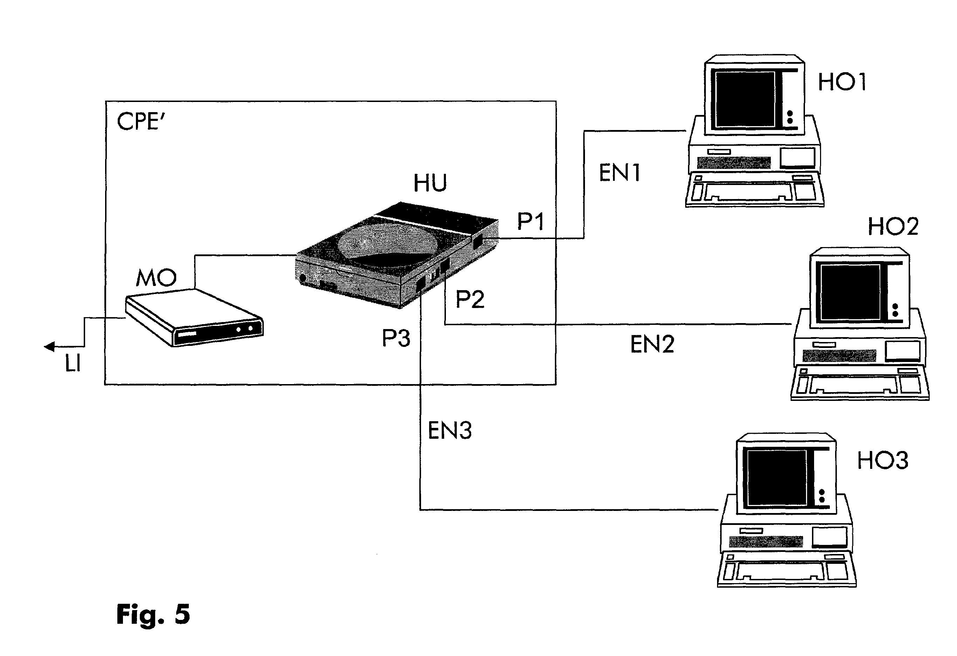

Figure 5 shows an example local area network configuration with the enhanced customer premises equipment CPE'. The enhanced customer premises equipment CPE' comprises a modem connected with a hub HU. The hub HU comprises three prots P1, P2, and P3. The modem is linked with a not shown access multiplexer via a local loop connection LI. Eack of the shown three hosts HO1, HO2, and HO3 is connected via an Ethernet link to one of the ports P1, P2, and P3.

With this configuration the host on the Ethernet LAN sharing the (xDSL) modem, can have their own ATM connection. The modem will forward Ethernet packets coming in on an Ethernet port into a dedicated (set of) ATM connections based on the source MAC address, found e.g. in the Ethernet packet header.

Ethernet devices HO1, HO2, or HO3, ... on the LAN connected to (one of) the Ethernet port(s) P1, P2, or P3 of the modem MO are sending out Ethernet packets with a unique source MAC address. The modem MO (and network behind it) supports multiple ATM connections which can be allocated to the Ethernet packet stream from a specific MAC address and/or a specific Ethernet port, as illustrated by the enhanced customer premises equipment CPE' comprising a modem MO and a built in hub HU.

The enhanced customer premises equipment CPE' might host a table in witch each source MAC address/Ethernet port is mapped onto a set of ATM connections. Whenever an Ethernet packet comes in on a specific Ethernet port, the Ethernet packet is forwarded into the corresponding ATM connection (based on the table). Ethernet packets are sent out towards network with network access server MAC address as destination and the host (terminal) MAC address as source. In the backward path, the network access server sends out Ethernet packets with the terminal MAC Address as destination and the network access server MAC address as source.

## Claims

1. A method for accessing a network access server (AS, AS1) in a multiple terminal access network including a local area network (2) and an asynchronous transfer mode network (1), said local area network (2) connecting multiple terminal devices (HO, HO1, HO2, HO3) via an access network element (CPE, CPE', CPE1 ) with said asynchronous transfer mode network (1) comprising the network access server, **characterized in that** said local area network (2) is an Ethernet and **in that** exchanging Ethernet packet(s) between one terminal device of said multiple terminal devices (HO, HO1, HO2, H03) and said network access server (AS, AS1) by transmitting Ethernet packet(s) over a defined separate asynchronous transfer mode connection (ALs) which is identified by a media access control address.

2. The method according to claim 1, **characterized in that** additional media access control addresses identify additional multiple asynchronous transfer mode connections (ALs) between said one terminal device and said network access server.

3. An access network element (CPE, CPE', CPEI) being connected with multiple terminal devices (HO, HO1, HO2, H03) via a local area network, said access network element (CPE, CPE', CPE1) is further connected with a network access server (AS, AS1) via an asynchronous transfer mode network (1), **characterized in that** said local area network (2) is an Ethernet, and **in that** said access network element (CPE, CPE', CPE1) comprising interface means for supporting multiple asynchronous transfer mode connections (ALs) which are identified by media access control addresses.

4. An access network element (CPE, CPE', CPE1) according to claim 3, **characterized in that** the access network element (CPE, CPE', CPE1) is a modem.

5. An access network element (CPE, CPE', CPE1) according to claim 4, **characterized in that** the modem is combined with a hub where a port of the hub is identified by a media access control address.

6. A network access server (AS, AS1) being connected with an access network element (CPE, CPE', CPE1) via an asynchronous transfer mode network (1), said access network element (CPE, CPE', CPE1) is connected with multiple terminal devices (HO, HO1, HO2, HO3) via a local area network, **characterized in that** said local area network (2) is an Ethernet, and **in that** said network access server (AS, AS1) comprising interface means for supporting multiple asynchronous transfer mode connections (ALs) which are identified by media access control addresses.

7. A computer software product for accessing a network access server (AS, AS1) in a multiple terminal access network including a local area network (2) and an asynchronous transfer mode network (1), said local area network (2) connecting multiple terminal devices (HO, HO1, HO2, HO3) via an access network element (CPE, CPE', CPE1) with said asynchronous transfer mode network (1) comprising the network access server, **characterized in that** said local area network (2) is an Ethernet and **in that** the computer software product comprising programming means for exchanging Ethernet packet(s) between one terminal device of said multiple terminal devices (HO, HO1, HO2, HO3) and said network access server (AS, AS1) by transmitting Ethernet packet(s) over a defined separate asynchronous transfer mode connection (ALs) which are identified by media access control address.
